(19)

Europäisches
Patentamt
European
Patent Office
Office européen
des brevets

(11) **EP 2 896 555 A1**

(12) **EUROPEAN PATENT APPLICATION**
published in accordance with Art. 153(4) EPC

(43) Date of publication:
   **22.07.2015  Bulletin 2015/30**

(51) Int Cl.:
   **B62M 19/00** *(2006.01)*      **F16H 39/26** *(2006.01)*

(21) Application number: **12883111.2**

(86) International application number:
   **PCT/LV2012/000019**

(22) Date of filing: **27.11.2012**

(87) International publication number:
   **WO 2014/030988 (27.02.2014 Gazette 2014/09)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(30) Priority:  **21.08.2012  LV 120135 P**

(71) Applicants:
   • **Miropolecs, Stanislavs**
      **1084 Riga (LV)**
   • **Miropolecs, Pavels**
      **2130 Dreilini (LV)**

   • **Ludinovskis, Igors**
      **1048 Riga (LV)**

(72) Inventors:
   • **Miropolecs, Stanislavs**
      **1084 Riga (LV)**
   • **Miropolecs, Pavels**
      **2130 Dreilini (LV)**
   • **Ludinovskis, Igors**
      **1048 Riga (LV)**

(74) Representative: **Fortuna, Jevgenijs**
      **Foral Patent Law Office**
      **P.O. Box 98**
      **1050 Riga (LV)**

(54)   **STEPLESS BICYCLE TRANSMISSION**

(57)   The invention refers to hydraulic rotation transmission with two side output of driving shaft and one side output of driven shaft and can be used in power transmissions and transmissions where the stepless ratio variation is essential. It also can be used as stepless speed variation device in bicycles (Fig. 1). Getting any transmission ratio at reduced dimensions and mass is achieved in the hydraulic transmission by applying new scheme, including motionless and movable bodies containing two coupled rotors, composing of camshafts with pistons and separated by motionless wall. Transmission ratio varies from 0 to maximal value displacing the movable body in axial direction by means of overhanging control arm.

Fig. 1

**EP 2 896 555 A1**

**Description**

**Disclosure Of The Invention**

The invention refers to hydraulic rotation transmissions and can be used in power transmissions with two oppositely attached actuators where stepless transmission ratio is desirable, particularly in bicycles. Its goal is to raise transmission performance factor, realize stepless variation of the transmission ratio and reduce the device dimensions and weight.

Currently in use is mechanical transmission [1, 2] consisting of several sprockets on the rear wheel axle and pedal crank, group with chain tension pulley and complicated wire system for ratio switching.

The mentioned transmission has the following detriments:

- only several transmission ratios are available, at that with step switching;

- significant mass and dimensions of the device due to the presence of several sprockets and elongated chain;

- increased production labour hours and unit price of the device due to the abovementioned reasons and due to complicated speed control wire regulation.

The scope of the present invention is achieved by means of using camshafts with hypotrochoid profile pistons, separated by shaped wall in movable cartridge, inserted in fixed housing. Mentioned design enhancements together with previously known engineering solutions give the following arrangement.

The inner arrangement of the device with controlled cartridge compactly placed in the hollow housing and consists of fixed partition wall-core and two rotors. The housing has opening for control arm, connected with the cartridge, and its ends is closed by caps. The core divides the cartridge cavity in two variable volume parts and together with caps serve as driving camshaft support. The driven camshaft is running fitted on the driving camshaft. Pistons are movably fitted on cylindrical cams of the both shafts. The driving camshaft can turn in either direction.

The transmission ratio of the device varies by displacing cartridge-to-fixed housing and core, and fixing the chosen position by turning the arm. Proportional variation of two parts of the cartridge inner cavity and, correspondingly, camshafts speed occurs on cartridge displacing.

The invention is illustrated with the following figures:

- Fig. 1 Basic structure of the device in longitudinal cross-section;

- Fig. 2 Transversal cross-section taken along line A-A on Fig. 1 of the device with the cartridge 7;

- Fig. 3 Views of the cartridge 7 on Fig. 1;

- Fig. 4 Views of the cartridge 7' on Fig. 1;

- Fig. 5 Views of the cartridge 7" on Fig. 1, 2;

- Fig. 6 Views of the movable wall 5 on Fig. 1;

- Fig. 7 Views of the core 8 on Fig. 1;

- Fig. 8 Views of the core 8' on Fig. 1;

- Fig. 9 Views of the driven shaft 11 on Fig. 1;

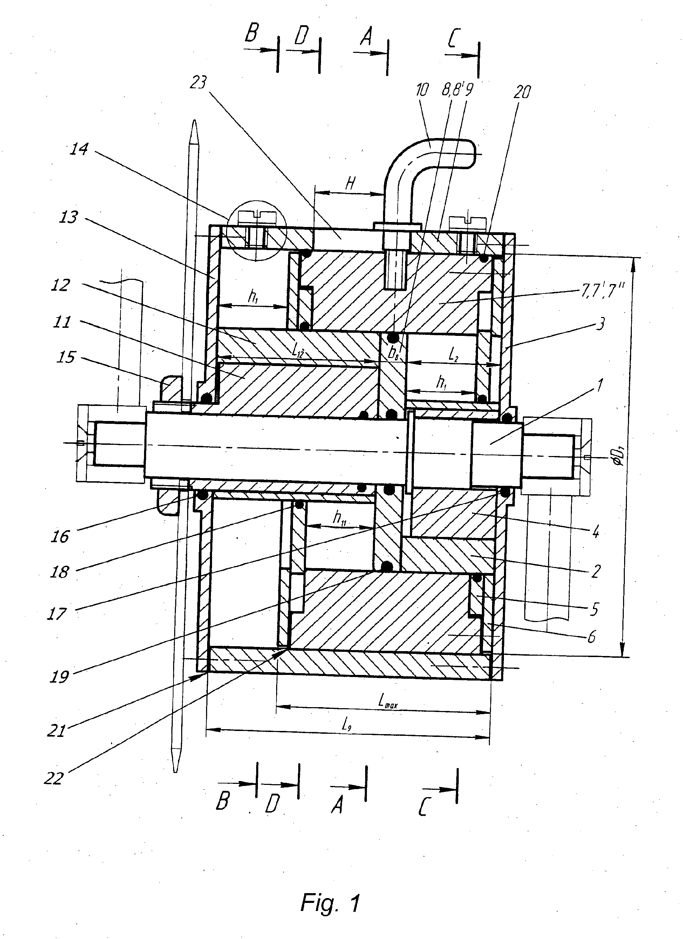

- Fig. 10 B-B cross-section of the device from Fig. 1;

- Fig. 11 C-C cross-section of the device from Fig. 1 with the following turn of the shaft 1 by angle $\alpha$ from vertical;

- Fig. 12 D-D cross-section of the device from Fig. 1 with the following turn of the shaft 11 by angle $\beta$ from vertical.

The main groups and parts of the device are made, according to the abovementioned design and functional approach, in the following mode.

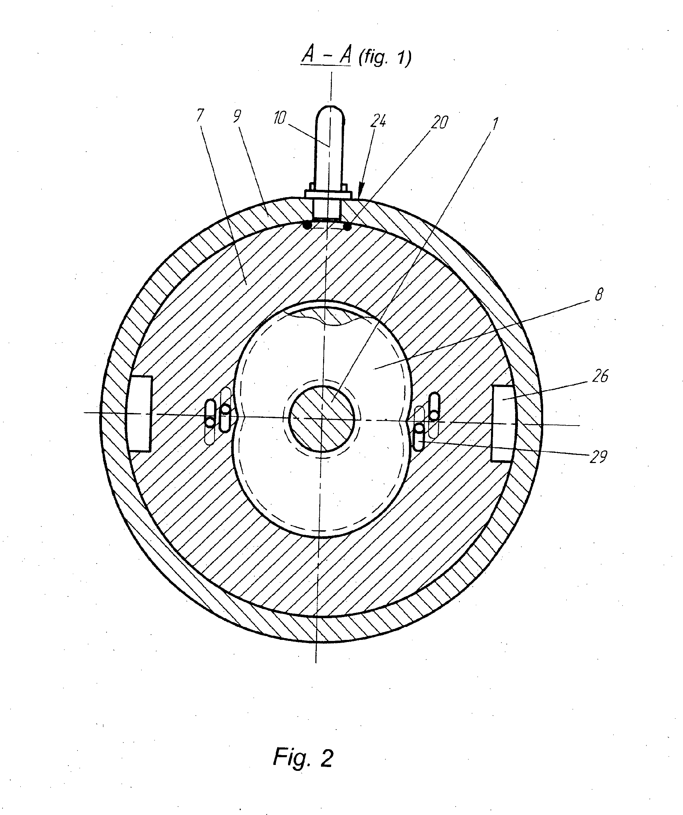

The housing 9 (Fig. 1) is a part, containing mechanism of speed rotation variation. Control arm 10 passes through longitudinal opening 23 in the housing middle part, preventing arm and cartridge rotation and assuring both parts working travel $H_{max}$. Mounting pad 24 (Fig. 2, 10, 11) should be made around the opening for the arm flange support. The device can be provided with several openings as well as several control arms. The housing (or caps 3 and 13) should be provided with elements 14 (closable fitting or hole) for power fluid draining/filling or topping-up in case of liquid evaporation or leakage or for flushing in case of overheating.

The ends of the housing have several threaded holes for cap fixing. The housing can be provided with external eyes, brackets or flanges for fixing on bicycle frame or another facility.

Caps 3 and 13 (Fig. 1) are flange shaped and have central hole with groove for shaft passage seals 16 or 17 and simple fixing bores faced threaded holes in the housing ends. The cap could be provided with mentioned above fitting 14.

Driving shaft 1 (Fig. 1) composed of 5 parts. Short outer part seats on the inlet cap 3. Driven shaft 11 is running fitted on the long outer part. The short part also serves for fixing of the cam 4. The two extremities of driving shaft are used for fixing actuators, for example, pedal cranks, shown with thin lines in the Fig. 1. Configuration of the shaft extremities can be different, depending on known method of crank connection: with key, toothed, faceted and so on. The shaft can be made as one piece together with the cam.

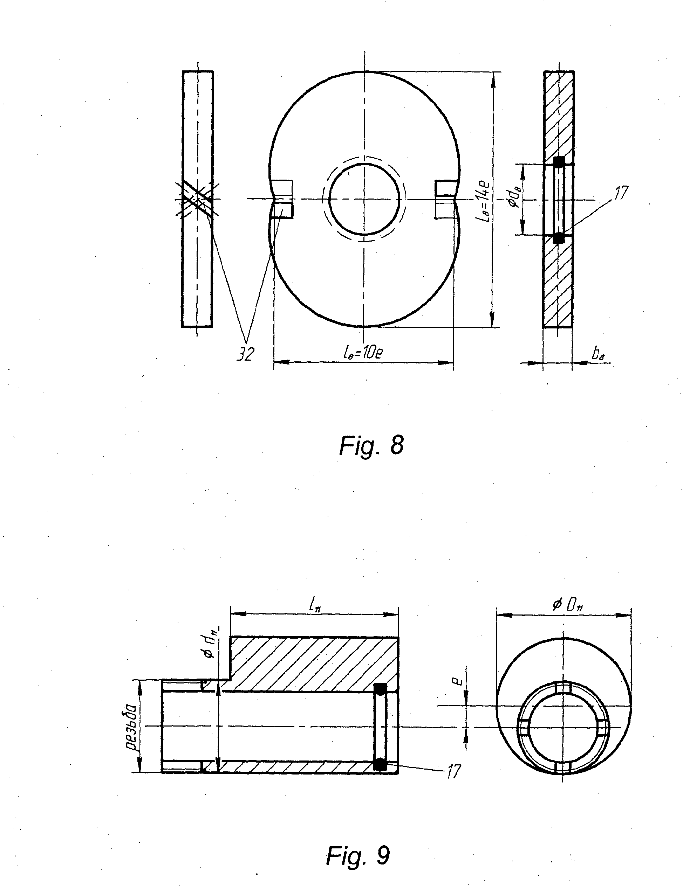

Driven shaft 11 (Fig. 1, 9) composed of two parts with different cylindrical surface diameters. Through boring in the both parts is coaxial with driving shaft 1 and the housing 9. The boring intended for running fit of the driven shaft on the driving one. The boring or the driving shaft should be provided with a groove for sealing 17. Longitudinal axis of bigger cylindrical surface of diameter $D_{11}$ is misaligned relative the boring axis by eccentricity $e$, which define parameters of pistons hypotrochoid and cartridge and core epytrochoid. The driven piston 12 is running fitted on the shaft section with diameter $D_{11}$ and length $L_{11}$, which is less then piston length $L_{12}$. The shaft part with minor diameter $d_{11}$ leans on the outlet cap 13 and protrudes of it. The protruded parts are configured by any of known modes for sprocket (shown with thin lines in the Fig. 1) installation. One of the possible fixing methods is presented in the Fig. 1. The sprocket with its spurs enters in the shaft grooves milled on the shaft end and fixed with the nut 15, screwed on the external thread of the shaft.

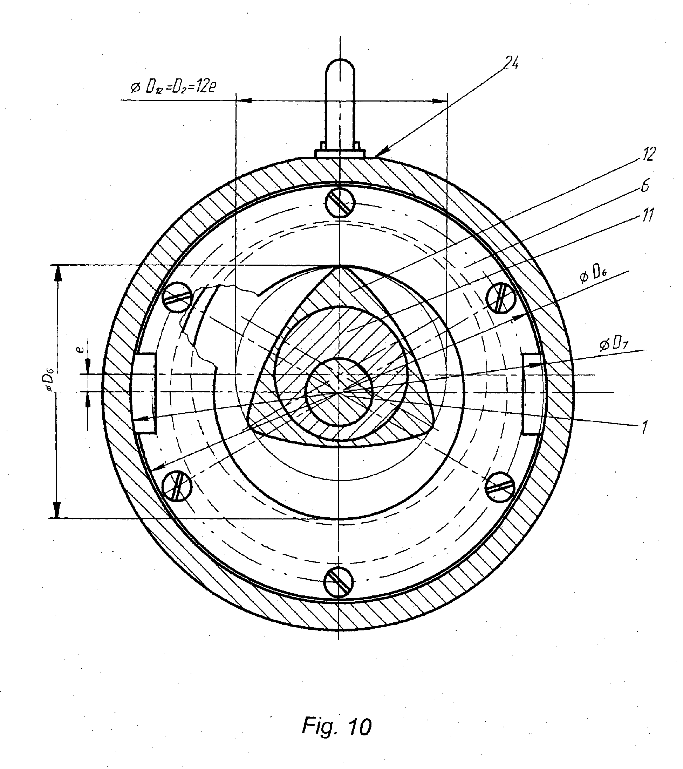

Pistons - driving 2 (Fig. 1) and driven 12 (Fig. 1, 10) have the same design but differs with length, depending on selected range of transmission ratio. The piston cross-section profile is close curve - hypotrochoid with three peaks and circumscribed circle diameter $D_{2n} = D_{12} = 2e$. It is the *Reuleaux* triangle. The curve's equations will be presented further. The pistons have axial boring for running fit on the shaft's cam directly or with ball or shell bearings. In the first case the piston or the cam should be made of appropriate antifriction material, for example bronze.

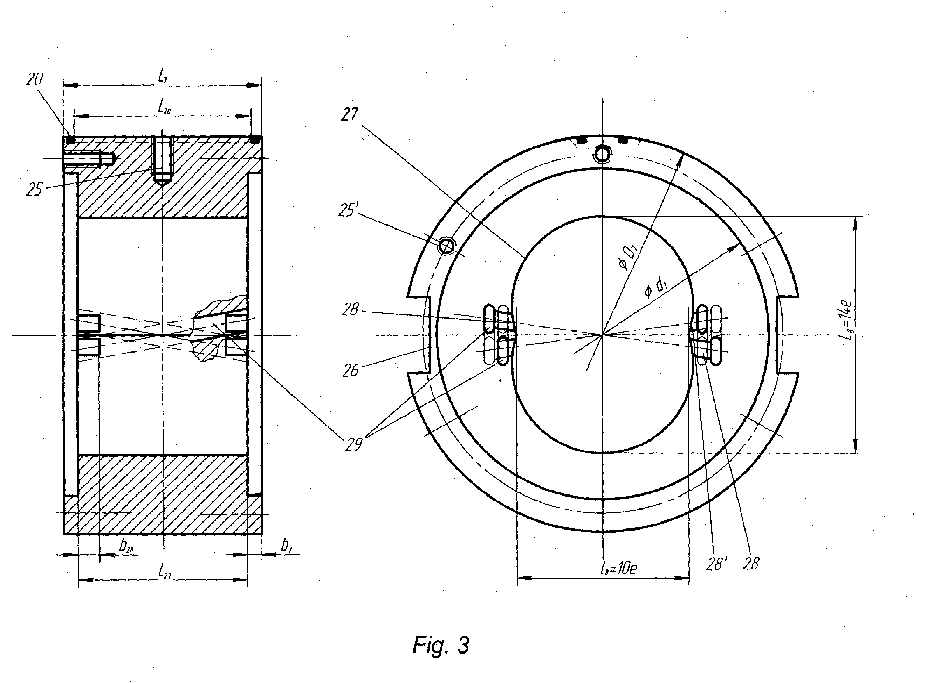

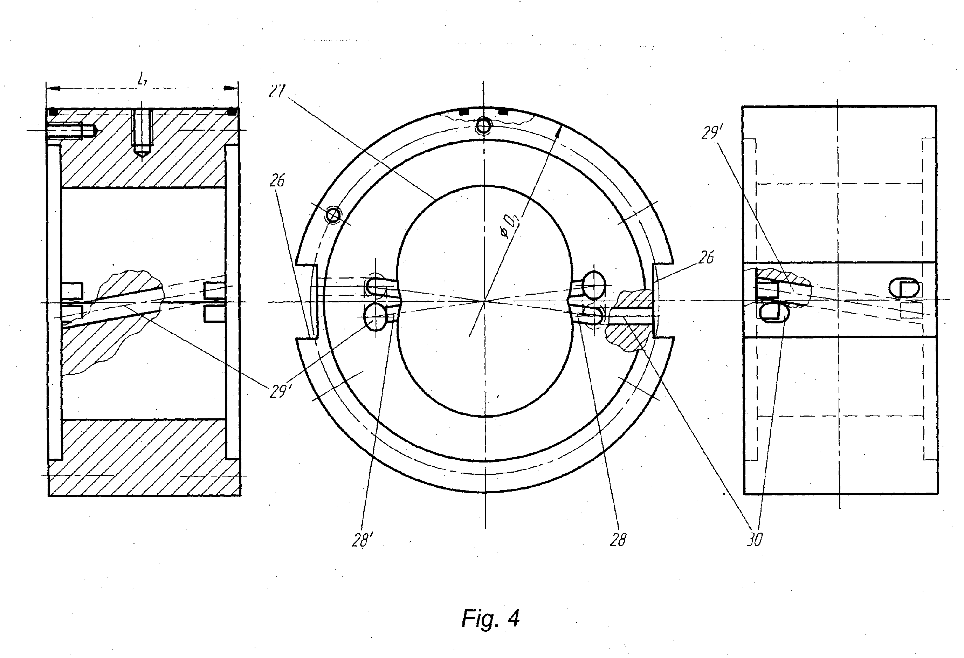

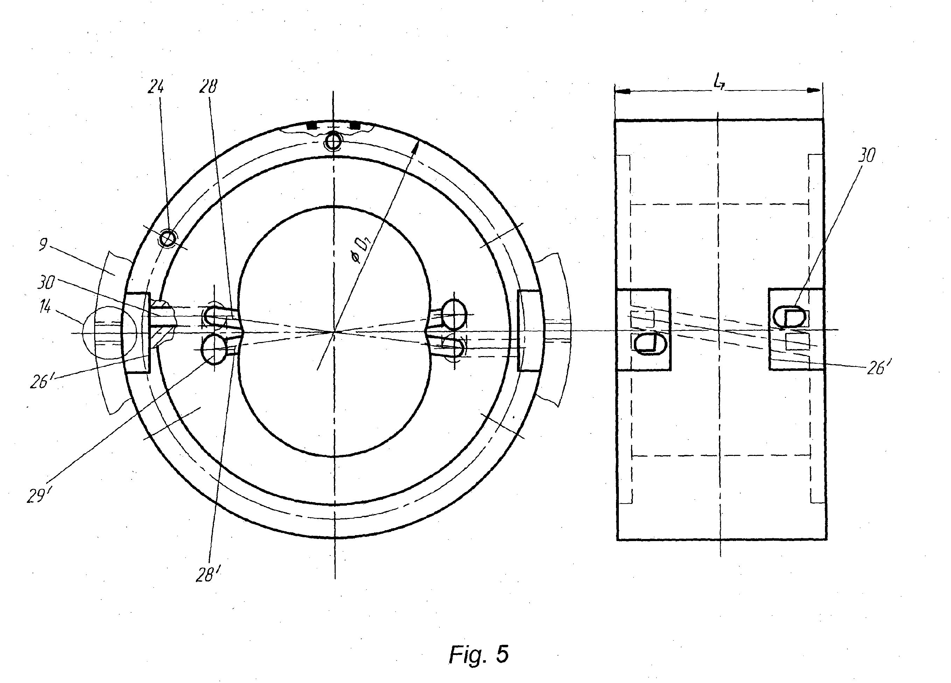

Cartridge (Fig. 1) can be made in three different versions - 7 (Fig. 3), 7' (Fig. 4), 7" (Fig. 5) described below. Their common design features are as follows:

-    external surface of the cartridge is cylinder with diameter $D_7$, corresponding running fit in the housing 9;

-    cartridge ends provided with threaded bores 25' for fixing of the clamps 6;

-    external surface should be provided with longitudinal grooves 26 or 26' for better connection of external cavities at the cartridge displacing; grooves length, number and configuration depend on the cartridge version;

-    outline of the internal pass-through opening 27 in the cartridge has the same cross-section as external outline of the core 8 and is the external part of epytrochoid in the form of closed polyline with two axis of symmetry long $L_8 = 14e$ and short $l_8 = 10e$ (the curve equations will be presenter further); the curve rolls off with sliding from within by piston's hypotrochoid at shaft rotation;

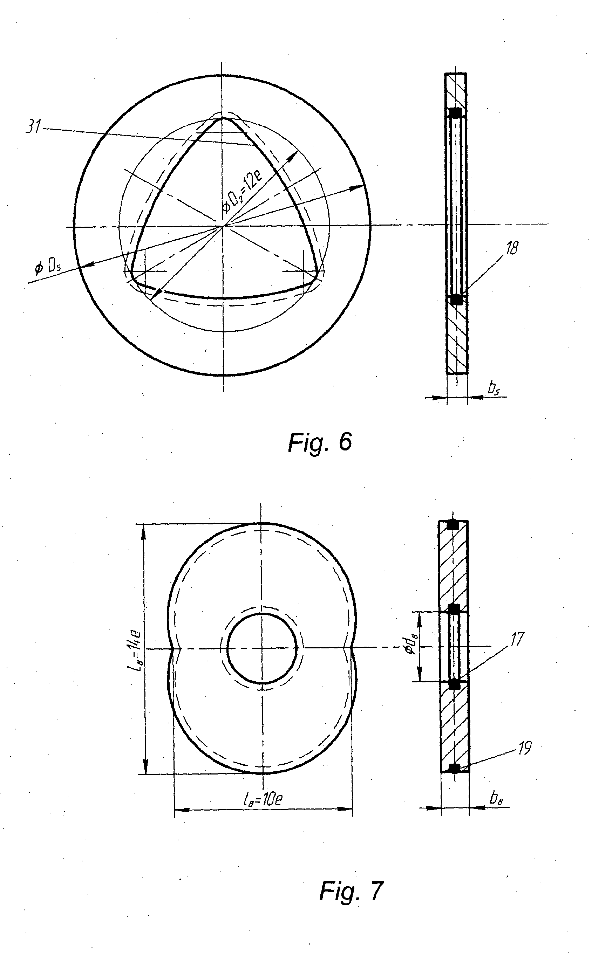

-    pass-through opening 27 at the both cartridge ends provided with sockets, bored out up to diameter greater than sum of movable wall 5 diameter (Fig. 6) and double eccentricity ($d_7 > D_5 + 2e$) and in depth $b_7$ less than movable wall depth $b_5$;

-    nominal length $L_{27}$ between internal ends of the cartridge, that is the pass-through opening 27 length is calculated from the maximal cartridge course H, core thickness $b_8$ (Fig. 7) and range of the transmission ratio $u$; at $0 < u \leq 1$, $L_{27} = 2 H_{max} + b_8$ ;

-    mounting spot for the control arm should be provided on the cartridge external surface, it can be, for example, threaded hole 25 for screwing in of the control arm 10; mounting spot can be positioned in any place of the external surface and there could be several mounting spots as well as several control arms on the cartridge;

- closed groove for seal 20 should be made in the cartridge or in the housing around control arm mounting spot; the groove length $L_{20}$ should be sufficient to assure that the seal does not enter within the opening at the extreme positions of the cartridge;

- open long 28 and short 28' outlet channels started from epytrochoid machined in the both sockets in cartridge ends; their depth $b_{28}$ should be less than core thickness $b_8$ and their length should correspond to the total covering of the channel by the movable wall; the channels are pair wise symmetrical relative to the end centre and placed near the minor symmetry axis of the epytrochoid;

- there are flow channels 29 and 29' passing slantwise relatively to the ends in the cartridge body from end to end and connecting outlet channels, disposed on opposite ends, but on one side of the major symmetry axes plain of the epytrochoid and on opposite sides of the minor symmetry axes plain of the epytrochoid; that is, the flow channels connect pair wise the cavities on the driving shaft with corresponding cavities of the driven shaft; the number of channels and their configuration depends on the cartridge version;

Version I of the cartridge 7 (Fig. 1, 3) intended for hydraulic transmission where part of the power fluid is enclosed in the cartridge without connection with the cavities external to the cartridge; there are 4 flow channels in this cartridge version. In Fig. 3 presented cross-sections of shaped channels 29.

Version II of the cartridge 7' (Fig. 1, 4) intended for increased capacity of flow channels for fluid overflowing and therefore maximal transmission power. In this design part of power fluid circulate through the cavities external to the cartridge and the other part only through the channels. There are two flow channels 29' disposed by one on the opposite sides of the opening 27 and connecting short outlet channels 28' disposed on the opposite cartridge ends to each other; the design provides 4 additional by-pass channels 30, connecting long outlet channels 28 with the cavity of the nearest groove 26.

Version III of the cartridge 7 (Fig. 1, 5) intended for hydraulic transmission with power fluid circulated for cooling through external circuit, for example, special tank or internal cavities of bicycle frame. The design and disposition of all the cartridge elements except longitudinal external grooves is the same as of the version II. There are 4 external grooves, starting from the ends and going not along the whole cartridge length but only over the by-pass channels 30.

Comment: in the III cartridge version filling elements 14 (basic or additional) should be disposed on housing 9 facing grooves 26', as it is shown with thin lines in Fig. 5.

Core (Fig. 1) is disposed inboard of the device. It is restrained form axial displacement by the ends of pistons 2 and 12 and from turn around the longitudinal axes of the device by cartridge 7, 7' or 7". The core can be made in two versions - 8 (Fig. 7) or 8' (Fig. 8), described below. Their common design features are as follows:

- the core has central boring $d_8$ machined for running fit of the driving shaft 1; the boring or the driving shaft can be provided with a groove for seal 17;

- the cross-section curve of the core external surface - it is the same external border of epytrochoid as of the cartridge longitudinal opening 27 cross-section, but with tolerances, allowing free and hermetic displacement of the cartridge relative the core;

- core width $b_8$ determines the longitudinal dimension of the cartridge and the whole transmission.

Version I of the core 8 has no by-pass channels. It is possible to make a seal groove 19 on the external surface of the part.

Version II of the core 8' is made with two by-pass channels 32. The channels should be milled, starting from the rib of each root. Longitudinal axes of the channels are parallel to the plain of the major axes (cross-section plane) of the core ends, are acute angled to the ends, and are symmetrical between them relative longitudinal axes of the boring.

The II version can be used with cartridge having only short outlet channels 28' (two on each end) connected with flow 29' or by-pass 30 channels and no other channels.

Movable wall 5 (Fig.1, 6) is disk shaped with central hole 31, machined over the same hypotrochoid as pistons but with tolerance allowing free and hermetic travel of the piston through the hole relative the core. Seal groove 18 can be machined along the whole perimeter of the hole. Wall thickness $b_5$ should be bigger than depth $b_7$ of the cartridge hollow.

Clamps 6 (Fig. 1, 10) are mounted on the cartridge ends. The clamp is a washer, shaped with external diameter $D_6$ less than cartridge external diameter $D_7$ and with central hole, which diameter $d_6$ is bigger, that length $L_8$ of the core major axes (Fig. 7, 8). It is admissible to make the hole as epytrochoid like core profile instead of circular one. The clamp has several holes facing threaded holes on the cartridge ends for fasteners.

Control arm 10 (Fig. 1) can be designed in different ways of attachment to the cartridge and control system elements (like wires). The simplest solution for manual control - threaded rod screwed in the cartridge - is shown in the Fig. 1. The thickness of the arm section, entering in the housing opening, should be equal to the opening/s width to prevent the arm and cartridge turn. The flange on the arm intended for eventual arm blocking by screwing it in the cartridge against the mounting pad on the housing. By this way can be fixed selected transmission ratio.

Nut 15 (Fig. 1) serves for sprocket fixing on driven shaft by screwing it over the shaft threaded end. The nut can be designed in different modes.

Adjusting washers 21 and 22 (Fig. 1) intended as for housing sealing as well as for adjustment of the caps 3 and 13 and clamps 6 pressure respectively against the ends of the piston 2 and 12 and movable walls 5, assuring their free travel during transmission functioning. The adjustment occurs by screwing caps and clamps fasteners into the housing and in the cartridge respectively. Washers can be done of metal of different calibrated thickness or non metallic of elastic material like rubber, polyurethane or similar. Outer and inner diameter of the washers should be equal to the corresponding diameters of the housing and cartridge.

Sealing rings 16, ..., 20 (Fig. 1) are made of cord with round or other cross-section. It can be done of elastic oil resistant rubber, polyurethane and so on. The seals disposed in the grooves of the corresponding parts, assuring tight contact of moving parts. Precise machining of mating parts allows avoiding some of the sealing.

Operational sequence of the device functioning is presented below on the base of described above design of the transmission with the cartridge 7, made according to the version I.

Let's admit the following source data:

- let's take initial stabilized condition, when the transmission ratio u remains constant and the control arm 10 position corresponds equal distance from the movable walls 5 to the core 8, that is $h_1 = h_{11}$.

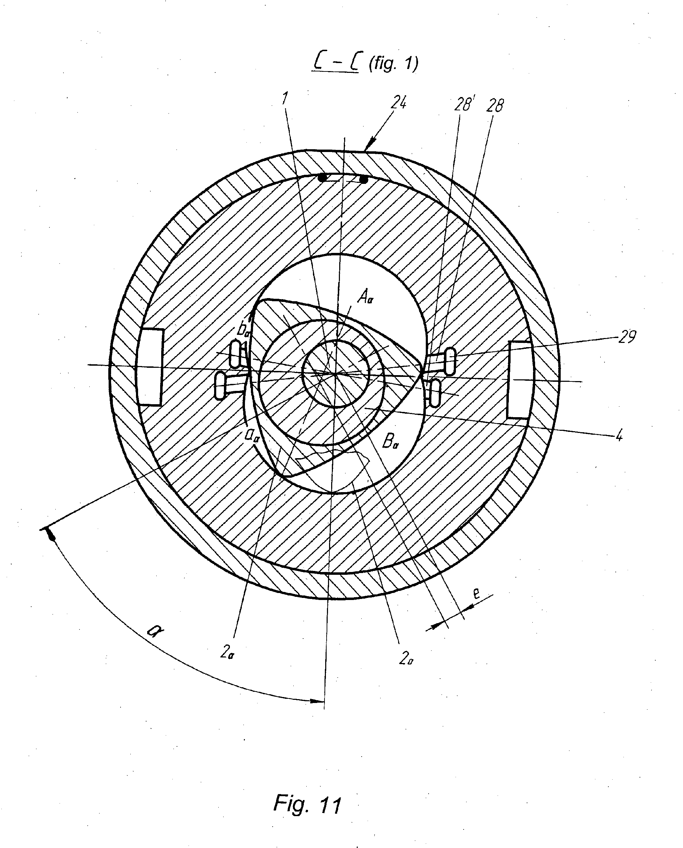

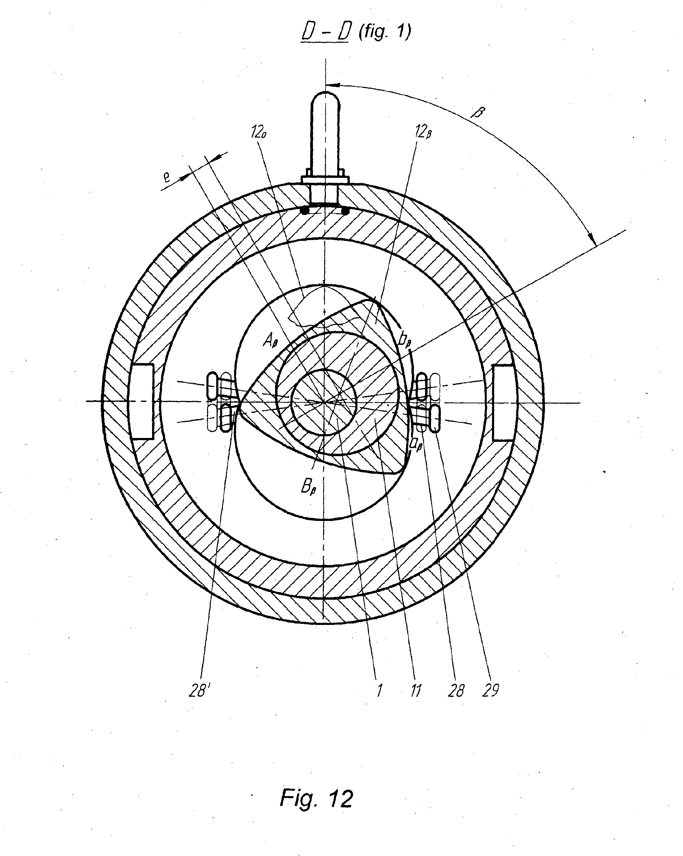

- parts of the pistons $2_0$ and $12_0$ (depicted with thin lines in Fig. 11 and 12) mounted respectively on the driving 1 and driven 11 shafts correspond the initial position of the device.

At any given time the piston profile in its cross-section has not less than 4 contact points with the cartridge, which divide the space between the piston and the cartridge in parts with variable volumes. Initial lengths (along longitudinal axis of the device) of all the cavities inside the cartridge are equal, so the total volume around the driven shaft is the same as around the driving shaft.

On driving shaft 1 (Fig. 11) with the cam 4 turning clockwise by angle $\alpha$ the piston moves to the position $2_\alpha$, fluid expels from the cavities $A_\alpha$ and $a_\alpha$ then through the long outlet channels 28 and flow channels 29 inflows to the cavities $A_\beta$ and $a_\beta$ (Fig. 12), displacing the driven piston and turning the driven shaft 11 in the same directions by angle $\beta$. At that the driven piston takes position $12_\beta$, fluid expels from the cavities $B_\beta$ and $b_\beta$ and through short outlet channels 28' and flow channels 29 inflows to the expanding cavities $B_\alpha$ and $b_\alpha$ (Fig. 11) over the driving shaft.

Such circulation processes take place continuously in all the channels and repeat in different cavities pressing successively on each part of the piston, so that the driven shaft rotates continuously.

On the shaft 1 rotating in the opposite direction all the above mentioned fluid flows change their flow and pressing directions making the driven shaft rotates in opposite direction as well.

The shafts rotations speeds are co-directional and due to the initial equity of the fluid volumes around them also equal in absolute value.

Variation of the control arm position 10 so, that $h_1 \neq h_{11}$ the fluid volumes on the right and on the left of the core 8 also will be different, causes nonequity of the shafts 1 and 11 rotation speed $n_1$ and $n_{11}$. The transmission ratio is equal $u = n_{11}/n_1 = h_1/h_{11}$. The ratio can be varied from 0 (motionless driven shaft) up to maximal value.

Reference parameters to evaluate the transmission dimensions and power are:

- basic structural parameter - eccentricity between axes of rotation of the pistons and shafts e;
- maximal transmission ratio $u_{max}$;
- maximal stroke of the control arm (cartridge displacement) $H_{max}$
- core thickness $b_8$.

The following ratios should be observed for regular operation of the device:

1) the curve of pistons 2 and 12 (Fig.1) profile should be hypotrochoid, described in Cartesian ordinates as:

$$X_2 = e\,(5Sin\,\tau - Sin\,2\tau),$$

$$Y_2 = e\ (5 Cos\ \tau + Cos\ 2\tau),$$

where arbitrary parameter $\tau = \div\ 2\pi$; diameter of the circumscribed circle of the hypotrochoid is $d_2 = 12e$;

2) contour of the outer surface of the core 8 (Fig. 7) and the cross-section of the internal opening 27 of the cartridges 7, 7' and 7" (Fig. 3, 4, 5) are epytrochoid described in Cartesian ordinates as:

$$X_7 = \frac{e}{7}\ (24\ Sin\ \tau + 25\ Sin\ 3\tau),$$

$$Y_7 = \frac{e}{7}\ (24\ Cos\ \tau + 25\ Cos\ 3\tau),$$

length of the major axes of symmetry of the epytrochoid $L_8 = 14e$, and the minor one $l_8 = 10e$.

3) length of the cartridge opening 27 (Fig. 3) is equal to

$$L_{27} = b_8 + H_{max}\left(1 + {}^1/_{u_{max}}\right) = b_8 + H_{max}\left(1 + i_{min}\right),$$

where $i_{min}$ is transmission number ($i = {}^1/_u$). At $u_{max} = 1$ (for speed-reducing set) $L_{27} = b_8 + 2H_{max}$;

4) housing 9 length (Fig. 1) is equal to $L_9 = L_{max} + H_{max}$, where $L_{max}$ - length of the cartridge with clamps 6;

5) the ratio of the hydraulic transmission is equal to

$$u = n_{11}/n_1 = h_1/h_{11}$$

where $n_1$ and $n_{11}$ - rotation speeds of driving and driven shafts, $h_1$ and $h_{11}$ - core 8 spacing from movable walls 5, placed correspondingly on the driving and driven shafts.

LIST OF ELEMENT NOTATIONS IN THE FIGURES

1 - driving shaft;
2 - driving piston;
3 - inlet cap;
4 - driving shaft cam;
5 - movable wall;
6 - clamp;
7 - cartridge with 4 flowing channels and 2 long external grooves;
7' - cartridge with 2 flowing channels and 2 long external grooves;
7" - cartridge with 2 flowing channels and 4 short external grooves;
8 - core;
9 - housing;
10 - control arm;
11 - driven shaft;
12 - driven piston;
13 -outlet cap;
14 - filling fitting;
15 - nut;
16 - the driven shaft sealing ring;
17 - driving shaft sealing ring;
18 - piston sealing ring;
19 - core sealing ring;
20 - opening sealing ring;

21 -washer for the cap adjusting;
22 -washer for the clamp adjusting;
23 - opening in the housing;
24 - mounting pad;
25 - threaded hole in the cartridge for control arm mounting;
25' - threaded hole in the cartridge for clamp mounting;
26 - long external longitudinal groove in the cartridge;
26' - short external longitudinal groove in the cartridge;
27 - longitudinal opening in the cartridge;
28 - long outlet channel of the cartridge;
28' - short outlet channel of the cartridge;
29 - shaped flowing channel of the cartridge;
29' - cylindrical flowing channel of the cartridge;
30 - by-pass channel of the cartridge;
31 - central hole in the movable wall;
32 - core by-pass channel;

REFERENCE LIST

1. Wilson, David Gordon, Bicycling science. Third edition, 2004
2. Panin P.V. Bicycle repair. Moscow, 1989.

**Claims**

1. Stepless bicycle transmission containing driven shaft, two actuating levers, reduction rate device and sprockets with chain, **characterized in that** the device is provided with housing, having opening for control arm and internal cavity, filled with power fluid, and arrangement for transmission ratio variation.

2. Hydraulic transmission as per claim 1, **characterized in that** the control device is provided with jutting arm, fixed on the internal mechanism of the rotation transformation and being able for displacement along the opening in the housing.

3. Hydraulic transmission as per claim 2, **characterized in that** internal end face of the cap mounted on the housing end machined for providing sliding contact with piston end face and has central hole for output shaft support.

4. Hydraulic transmission as per claim 3, **characterized in that** the driving shaft has cylindrical cam for running fit of the driving piston with eccentricity e relatively the shaft axes and the both output ends connected with actuators.

5. Hydraulic transmission as per claim 4, **characterized in that** the driven shaft has pass through boring for running fit on the driving shaft and is made of two parts, one of which is cam shaped with eccentricity e relatively to the boring axes and serve for running fit of the driven piston, but the other outgoing and serve for connection to the actuated device.

6. Hydraulic transmission as per claim 5, **characterized in that** the principal parts of the mechanism, interacting with power fluid are pistons, having plain ends for sliding contact with end faces of the cap and core, central hole for running fit on the shaft cam and outer surface formed by hypotrochoid described in Cartesian ordinates by the following formula:

$$X = e\,(5 Sin\,\tau - Sin\,2\tau),$$

$$Y = e\,(5 Cos\,\tau + Cos\,2\tau),$$

where arbitrary parameter r = 0, ..., $2\pi$.

7. Hydraulic transmission as per claim 6, **characterized in that** central sockets are machined in the cartridge ends for disposing other parts and there is place for control arm attachment on the external surface, and central opening cross-section profile is the external curve of epytrochoid:

$$X_7 = \frac{e}{7} \left( 24 \, Sin\, \tau + 25 \, Sin\, 3\tau \right),$$

8. Hydraulic transmission as per claim 7, **characterized in that** there are partition wall - core with flat end faces having sliding contact with the pistons end faces, central boring for running passage of the driving shaft and external surface, formed by the same epytrochoid as of the cartridge longitudinal opening cross-section, but with tolerances allowing longitudinal displacement of the cartridge relative the core.

9. Hydraulic transmission as per claim 8, **characterized in that** movable walls, placed in the sockets of the cartridge ends, have sliding contact with the socket bottom and with clamp and are disc shaped with external diameter greater then 16e, but the central hole formed by the same hypotrochoid as the external surfaces of the pistons with tolerances allowing piston travel through the hole.

10. Hydraulic transmission as per claim 9, **characterized in that** clamps with plain internal end face, having sliding contact with movable wall, and central circular or shaped hole are attached to the cartridge ends.

Fig. 1

A – A (fig. 1)

Fig. 2

Fig. 3

Fig. 4

Fig. 5

Fig. 6

Fig. 7

Fig. 8

Fig. 9

Fig. 10

C – C (fig. 1)

Fig. 11

D - D (fig. 1)

Fig. 12

## INTERNATIONAL SEARCH REPORT

| International application No. |
|---|
| PCT/LV 2012/000019 |

| A. CLASSIFICATION OF SUBJECT MATTER | |
|---|---|
| | *B62M 19/00 (2006.01)* *F16H 39/26 (2006.01)* |

According to International Patent Classification (IPC) or to both national classification and IPC

**B. FIELDS SEARCHED**

Minimum documentation searched (classification system followed by classification symbols)

B62M 19/00, F16H 39/00-39/32, B62M 1/00

Documentation searched other than minimum documentation to the extent that such documents are included in the fields searched

Electronic data base consulted during the international search (name of data base and, where practicable, search terms used)

PatSearch, PAJ, Esp@cenet, RUPAT

**C. DOCUMENTS CONSIDERED TO BE RELEVANT**

| Category* | Citation of document, with indication, where appropriate, of the relevant passages | Relevant to claim No. |
|---|---|---|
| X A | WO 1989/005754 A1 (PETTIT FRANK R.) 29.06.1989, abstract, fig. 4-6 | 1, 2 3-10 |
| A | US 4684143 A (YASUNORI SATO) 04.08.1987, abstract | 1-10 |
| A | SU 175012 A ("KOULINDASTR (PETENTS) LIMITED") 25.11.1965, the claims | 1-10 |
| A | RU 2095271 C1 (DAVYDOV VASILY IVANOVICH) 10.11.1997, abstract | 1-10 |
| A | RU 2264946 C2 (GONGIN BORIS DMITRIEVICH) 27.11.2005, abstract, fig. 1 | 1-10 |

☐ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 April 2013 (09.04.2013) | 25 April 2013 (25.04.2013) |

| Name and mailing address of the ISA/ | Authorized officer |
|---|---|
| **ISA/RU** | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

* **WILSON, DAVID GORDON.** Bicycling science. 2004